# EUROPEAN PATENT APPLICATION

(11) **EP 4 645 625 A2**
(43) Date of publication of application: **05.11.2025**
(21) Application number: 25174033.8
(22) Date of filing: 02.05.2025
(51) Int. Cl.: H02J 3/14, H02J 9/06, H02J 7/00, G05B 15/02

(54) **METHOD AND SYSTEM FOR POWER LIMITING IN BUILDINGS**

(30) Priority: 01.05.2024 US 202418651820
(71) Applicant: ABB SCHWEIZ AG, 5400 Baden (CH)
(72) Inventor: MOHAMED, Samy Faddel, Clayton, 27527 (US); GONG, Huangjie, Raleigh, 27607 (US); MELESE, Amanuel, Cary, 27519 (US)
(74) Representative: Maiwald GmbH

(57) **Abstract**

A power limit is received. Power consumption from one or more devices of a building is obtained. A status for each device and historical consumption data associated with each device is obtained. A set of devices of the one or more devices to disconnect are determined based on the power consumption being greater than the power limit. The set of devices are determined based on an algorithm that uses the status, the historical consumption data, and the power limit to calculate an anticipated power reduction from disconnecting a particular combination of the one or more devices that reduces the power consumption to less than or equal to the power limit. A signal is transmitted sequentially for actuating an actuator for a device of the set of devices to disconnect from a power source of the building while the power consumption is greater than the power limit.

## Description

### FIELD

The present disclosure relates to a method and system for controlling or limiting power consumption to improve the resilience of a building while maintaining occupant comfort.

### BACKGROUND

It is logical for users to choose to turn off certain devices in order to limit power consumption and avoid an expensive infrastructure upgrade to a load center for the home owner or building owner. Infrastructure upgrades may also be required on the utility provider side as a part of accommodating the electrification needs of the customers. Conventional methods do not provide a balance between providing electricity to a building or residence for a longer period of time and maintaining occupant comfort. Instead, conventional methods would merely replace a load center/main breaker or main wiring to manage power to a building such that old and new devices added to the building do not exceed a certain limit. Merely replacing a load center of a building is not practical because it could add significant costs and require more space to accommodate.

### SUMMARY

An embodiment of the present disclosure provides a computer-implemented method for limiting power consumption including receiving a power limit associated with a power limit mode, obtaining power consumption from one or more devices of a building, each device of the one or more devices associated with a current sensor for providing a current load for the device, obtaining a status for each device and historical consumption data associated with each device, determining a set of devices of the one or more devices to disconnect based at least in part on the power consumption being greater than the power limit, the set of devices determined based on an algorithm that uses the status, the historical consumption data, and the power limit to calculate an anticipated power reduction from disconnecting a particular combination of the one or more devices that reduces the power consumption to less than or equal to the power limit, and transmitting a signal, sequentially, for actuating an actuator for a device of the set of devices to disconnect from a power source of the building while the power consumption is greater than the power limit.

In an embodiment, the set of devices is further determined based on generating a list of different combinations of devices of the set of devices using a priority of devices to be disconnected included in user preferences for each device of the set of devices, the particular combination included in the list of different combinations.

In an embodiment, a plurality of devices of the set of devices are of a same priority as specified in the user preferences, and wherein the power limit is specified in the user preferences.

In an embodiment, the computer-implemented method further includes determining that thermal control loads are on and that a temperature for a thermal control load device is different than a conservation temperature, the thermal control load device of the one or more devices, and transmitting another signal to the thermal control load device to change the temperature to the conservation temperature.

In an embodiment, determining the set of devices to disconnect based at least in part on the power consumption being greater than the power limit occurs subsequent to determining that thermal control loads are on and that the temperature for the thermal control load device is different than the conservation temperature.

In an embodiment, determining the set of devices to disconnect based at least in part on the power consumption being greater than the power limit occurs upon expiration of a certain time period after transmitting the another signal to the thermal control load device to change the temperature to the conservation temperature.

In an embodiment, the computer-implemented method further includes obtaining a voltage of the building from a voltage sensor, and wherein the algorithm further uses the voltage to determine the set of devices.

In an embodiment, the computer-implemented method further includes determining that a particular device of the one or more devices has been manually connected to a power source of the building by a user in response to determining that the power consumption is greater than the power limit, transmitting a notification to a user device of the user identifying the manual connection of the particular device and a status that the power consumption is greater than the power limit, and disconnecting a certain device of the one or more devices based on a priority of devices to be disconnected included in user preferences for each device of the set of devices.

In an embodiment, the computer-implemented method further includes determining that the power limit mode has ceased, determining a sequence to reconnect the set of devices that were disconnected based on the power consumption being greater than the power limit, the sequence determined based at least in part on user preferences, and transmitting signals to the set of devices to reconnect each device of the set of devices to the power source of the building according to the sequence.

In an embodiment, the sequence is further determined based at least in part on a particular device of the set of devices with a largest power load.

In an embodiment, the sequence is further determined based at least in part on a sequence associated with devices disconnected from the power source.

Another embodiment of the present disclosure provides a computer system for limiting power consumption, including one or more hardware processors, which alone or in combination, are configured to provide for execution of the following steps including receiving a power limit associated with a power limit mode, obtaining power consumption from one or more devices of a building, each device of the one or more devices associated with a current sensor for providing a current load for the device, obtaining a status for each device and historical consumption data associated with each device, determining a set of devices of the one or more devices to disconnect based at least in part on the power consumption being greater than the power limit, the set of devices determined based on an algorithm that uses the status, the historical consumption data, and the power limit to calculate an anticipated power reduction from disconnecting a particular combination of the one or more devices that reduces the power consumption to less than or equal to the power limit, and transmitting a signal, sequentially, for actuating an actuator for a device of the set of devices to disconnect from a power source of the building while the power consumption is greater than the power limit.

In an embodiment of the computer system, the set of devices is further determined based on generating a list of different combinations of devices of the set of devices using a priority of devices to be disconnected included in user preferences for each device of the set of devices, the particular combination included in the list of different combinations.

In an embodiment of the computer system further includes determining that a particular device of the one or more devices has been manually connected to a power source of the building by a user in response to determining that the power consumption is greater than the power limit, transmitting a notification to a user device of the user identifying the manual connection of the particular device and a status that the power consumption is greater than the power limit, and disconnecting a certain device of the one or more devices based on a priority of devices to be disconnected included in user preferences for each device of the set of devices.

In an embodiment of the computer system further includes determining that power limit mode has ceased, determining a sequence to reconnect the set of devices that were disconnected based on the power consumption being greater than the power limit, the sequence determined based at least in part on user preferences, and transmitting signals to the set of devices to reconnect each device of the set of devices to the power source of the building according to the sequence.

In an embodiment of the computer system, the sequence is further determined based at least in part on a particular device of the set of devices with a largest power load.

Another embodiment of the present disclosure provides a computer-implemented method for limiting power consumption including obtaining a signal that corresponds to a power outage mode for a building, obtaining maximum power limit for a battery of the building and a state of charge for the battery, obtaining power consumption from one or more devices of the building which are utilizing power from the battery, determining a set of devices of the one or more devices that are not currently utilizing the power from the battery to connect to the battery based at least in part on the power consumption being less than the maximum power limit, the set of devices determined based on an algorithm that uses historical consumption data from the set of devices, user preferences, and the maximum power limit to calculate an anticipated power usage from connecting a particular combination of the one or more devices that maintains the power consumption to less than the maximum power limit, and transmitting a signal, sequentially, for actuating an actuator for a device of the set of devices to connect to the battery while the power consumption is less than the maximum power limit.

In an embodiment, the set of devices is further determined based on generating a list of different combinations of devices of the set of devices using a priority of devices to be reconnected included in the user preferences for each device of the set of devices and that a state of charge for the battery is greater than a minimum percentage state of charge for the battery, the particular combination included in the list of different combinations.

In an embodiment, the computer-implemented method further includes determining that thermal control loads are on and that a temperature for a thermal control load device is different than conservation temperature, the thermal control load device of the one or more devices, and transmitting another signal to the thermal control load device to change the temperature to the conservation temperature.

### BRIEF DESCRIPTION OF THE DRAWINGS

The present disclosure will be described in even greater detail below based on the exemplary figures. The disclosure is not limited to the exemplary embodiments. All features described and/or illustrated herein can be used alone or combined in different combinations in embodiments of the disclosure. The features and advantages of various embodiments of the present disclosure will become apparent by reading the following detailed description with reference to the attached drawings which illustrate the following:
FIG. 1 illustrates an example of a control unit in a control sub-panel, current sensors, monitored loads, and pole relays and pole breakers for interacting with certain loads from a source according to embodiments described herein;
FIG. 2 illustrates an example of a control unit with different input and output data according to embodiments described herein;
FIG. 3 illustrates an example flow chart for limiting power consumption according to embodiments described herein;
FIG. 4 illustrates an example flow chart for determining devices/loads to disconnect from a power source in a building according to embodiments described herein;
FIG. 5 illustrates an example flow chart for limiting power consumption in a scenario where some loads can be provided power from a battery or backup system according to embodiments described herein;
FIG. 6 illustrates an example flow chart for determining devices/loads to connect to a power source in a building according to embodiments described herein;
FIG. 7 illustrates a flow chart for limiting power consumption according to embodiments described herein; and
FIG. 8 illustrates a simplified block diagram of one or more devices or systems for limiting power consumption according to embodiments described herein.

### DETAILED DESCRIPTION

Embodiments of the present disclosure provide a method and system for limiting power consumption. While the present disclosure is described primarily in connection with machines, systems, or components operated in a residence, as would be recognized by a person of ordinary skill in the art, the disclosure is not so limited and inventive features apply to other components or systems of other building such as businesses, warehouses, or industrial environments.

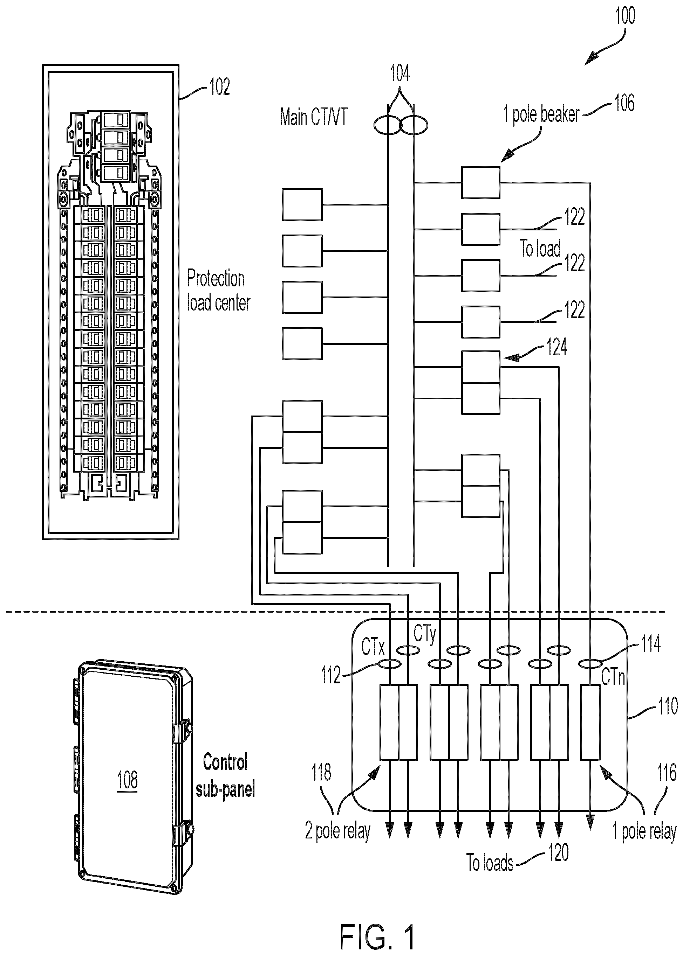

According to aspects of the present disclosure, a novel limiting power consumption system is described which provides solutions to problems associated with conventional power consumption limiting methods. For example, the limiting power consumption features described herein may monitor, through voltage (VT) sensors and current (CT) sensors, certain branches/loads that can be selectively controlled to limit power consumption and increase user comfort within a building. The control of the monitored loads can be implemented via an actuator that can include a relay or a controllable breaker that can be turned on or of using a command signal transmitted via an associated control unit. In embodiments, the sensors and actuators can be inserted between a load center and loads (as illustrated below in FIG. 1) or can be inserted as part of a load center itself for a building. A novel aspect of the present disclosure is that not all loads of a building need to be monitored and controlled. In an embodiment, only certain selected loads need to be monitored and controlled. For example, these loads may include loads that are large and flexible such as a Heating, Ventilation, and Air Conditioning (HVAC) system, water heater, pool pump, electric vehicle charging station, etc.

A user can select which loads in a building they want monitored and controlled. Users can also select local renewable resources such as batteries to be monitored and controlled via the features described herein. Conventional methods do not account for user preferences for certain loads to be monitored as well as user preferences for an order of priority in determining which loads to disconnect. In an exemplary embodiment, the computer system, system, and/or control unit can receive data from the monitored loads via current or voltage sensors using various means such as Wi-Fi, Bluetooth, ZigBee, Z wave, or any other suitable communication means. In embodiments, the control unit may collect and store measured data from different sensors (e.g., historical consumption data), real time consumption data, status of devices (e.g., on status, off status, current temperature status, etc.,) as well as user preferences which specify preferences of load priorities to be disconnected in case of a power limit mode. A user may interact with the control unit via an application, such as a mobile phone application, or via a dashboard (either hardware or software operated). In embodiments, the control unit can also limit power consumption via soft control (e.g., interacting with smart devices to change operating temperatures of certain devices to use less power).

As such, the present disclosure enables a highly customizable system that can accurately determines a set of devices/loads to disconnect to satisfy a targeted power limit. Not only does this novel mechanism provide practical benefits to users of buildings -such as, maintaining comfort during a loss of power by keeping certain prioritized loads operational, but it also provides technical improvements over conventional limiting power consumption methods. For example, embodiments of the present disclosure enable more reliable monitoring of certain loads while taking into account user priority load preferences to provide power to said loads to satisfy a targeted power limit thereby increasing the operating time of each monitored device while staying below a power limit. The features of the present disclosure provide benefits which can be implemented in case of a sudden power loss or a scheduled power loss (in the event of a scheduled rolling blackout). The improvements of the present disclosure can also increase the energy efficiency of devices as well as prolong device lifetime by continuing to provide power during outages instead of an entire shutdown of all devices of a building.

FIG. 1 illustrates an example of a control unit in a control sub-panel, current sensors, monitored loads, and pole relays and pole breakers for interacting with certain loads from a source according to embodiments described herein. FIG. 1 depicts an overview 100 of various components that may be used to implement the limiting power consumption features described herein. For example, FIG. 1 depicts protection load center 102, which may include a circuit breaker box. The overview 100 of FIG. 1 includes a simplified line diagram that includes lines which provide loads to devices from a power source. The overview 100 may include main current (CT) and voltage (VT) sensors 104. The simplified line diagram also depicts a pole breaker 106 which a control unit may interact with, via signals, to disconnect or connect loads from the power source. The overview 100 includes control sub-panel 108 which may include or otherwise store the control unit. Although the control sub-panel 108 is depicted as a separate component from the protection load center 102, the features described herein are not limited to such a configuration. For example, in some embodiments the control unit may be included in the protection load center 102 absent the control sub-panel 108, or the control sub-panel 108 with the control unit may be included in the protection load center 102.

The overview 100 depicts a breakout diagram 110 which includes the lines supplying the loads to various devices of a building as well as a plurality of current sensors 112-114 (CTₓ to CTₙ), as well as a 1 pole relay 116 and 2 pole relays 118. As depicted in FIG. 1, the current sensors 112-114 can be inserted in between the load center 102 and the loads 120 or they can be inserted as part of the load center itself, depicted at 104. As described above, not all loads need to be monitored and controlled (e.g., loads 122). Monitored/controlled loads are depicted at 124 and intersecting with breakout diagram 110 of FIG. 1. In embodiments, the control unit may be proximal or in the vicinity of the load center 102, as in the control sub-panel 108, or distant from the load center 102 such as in a computer, server, or cloud computing environment.

As described herein, the limiting power consumption events can correspond to: a loss of power, an anticipated loss of power that may be communicated to the control unit via a signal, message, or instruction from a utility provider, or from the start of a large load that can increase the total load of the building to be higher than limits of the main breaker/wiring limits/maximum power of a backup source or a signal coming from the utility to initiate a request for a load shedding command on a building level. The signal from a utility does not have to be in real time. Instead, it can be an agreed upon time of the day where load shedding is requested, or it can be through a third-party aggregator that coordinates multiple buildings. In embodiments, the control unit may include a communication module that allows it to interact with sensors 104, 112-114, actuators (e.g., pole breaker 106, 1 pole relay 116, 2 pole relay 118), and third party devices (e.g., smart devices, Internet-of-Things (IoT) devices) for changing or updating a temperature set point for these types of devices. For example, limiting power consumption may include changing the temperature of an HVAC system or water heater by remotely interacting with a thermostat as opposed to turning off the HVAC completely through a related actuator. The control unit may also store/maintain and update user temperature preferences to be used under different modes of operation (e.g., normal vs conservation temperatures). The control unit may also obtain, store, and analyze data external to the building such as weather data from an area around the building to improve recommendations generated for the user in limiting power consumption.

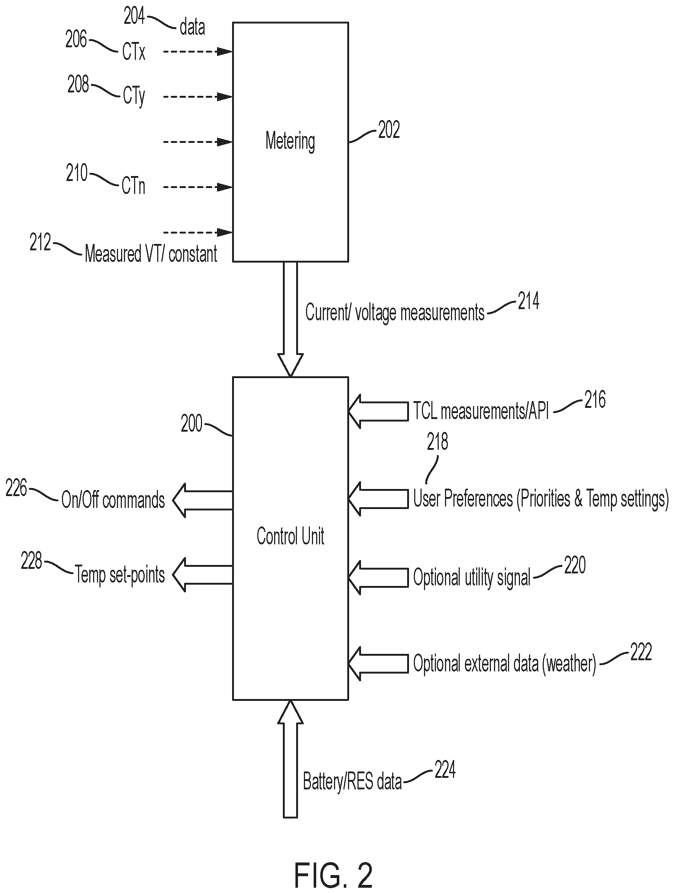

FIG. 2 illustrates an example of a control unit 200 with different input and output data according to embodiments described herein. FIG. 2 includes a metering component 202 for providing data 204 associated with current sensors 206-210 and/or measured or constant voltage sensors 212. As described herein, the current/voltage measurements 214 from loads of a building are provided to control unit 200. The control unit 200 may also receive or otherwise obtain temperature or operation status data from thermally controlled loads (TCL) 216 from certain devices or associated loads such as from smart devices or IoT devices. The data 216 may be provided or otherwise accessed by the control unit 200 via an application programming interface (API) call.

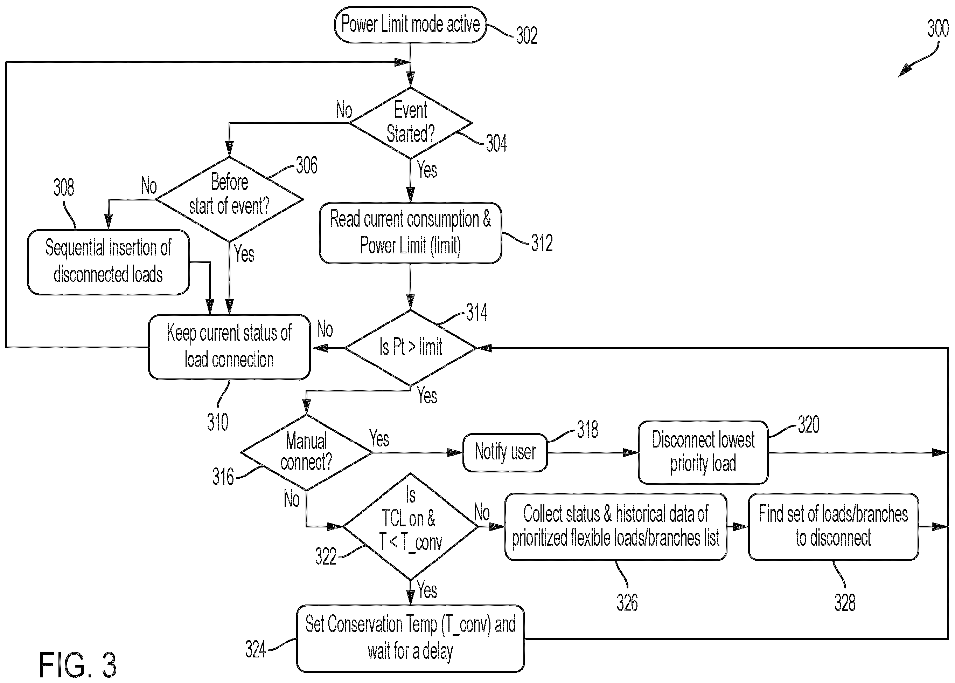

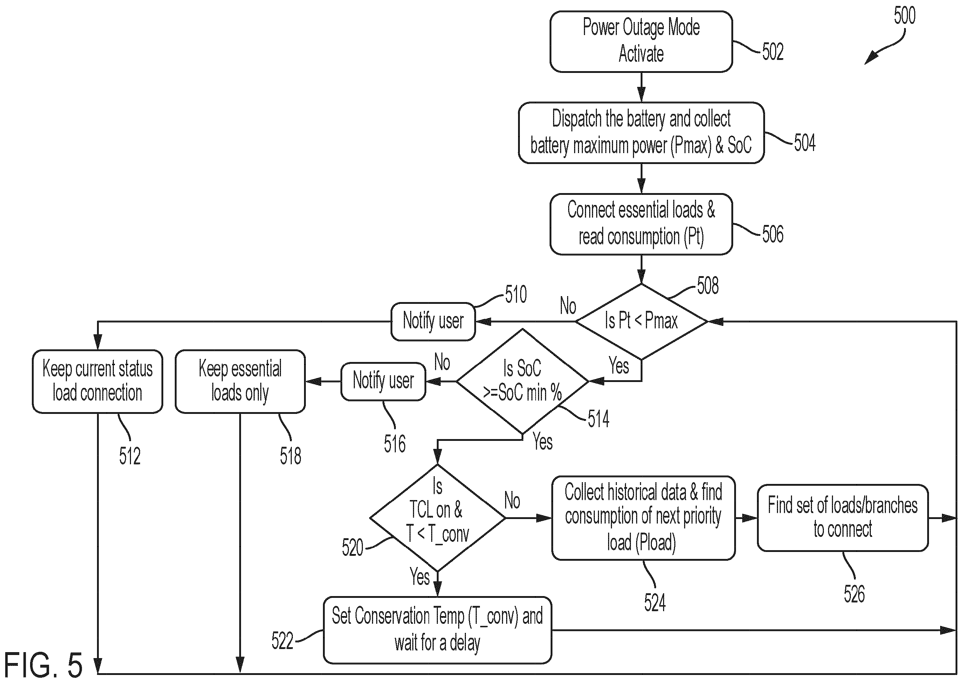

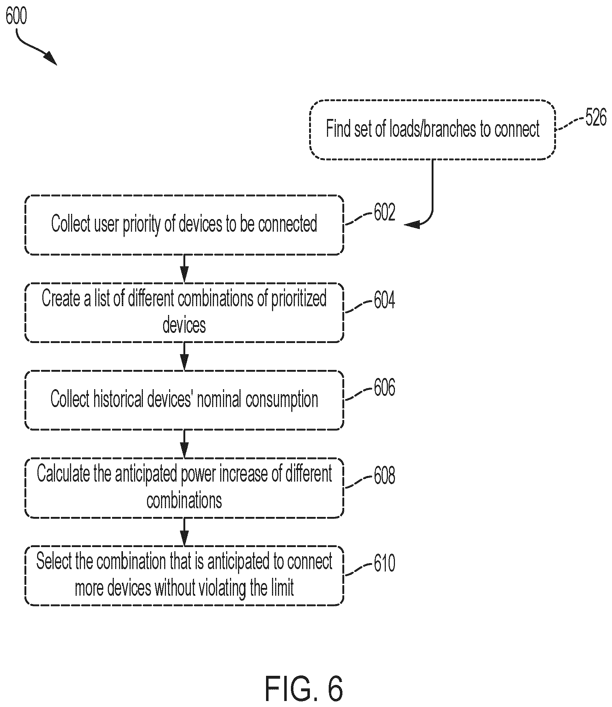

In embodiments, users may provide load priority preferences and temperature settings (normal vs conservation temperatures) 218 to the control unit 200 via an application, such as a mobile application, or via a dashboard presented by a user interface via a software program of a computer or via hardware associated with the building, load center, or sub-control panel. The control unit 200 may include a communication component (not depicted) such as a communication module for receiving information or data from users, TCL devices, utility providers, or other third party entities or external sources such as weather data sources. As depicted in FIG. 2, the control unit 200 may receive optional utility signals 220 from utility providers and optional external data such as weather data 222 from third party entities. In embodiments, and as described in further detail below with reference to FIGs. 5 and 6, battery or renewable energy source (RES) data 224 may be provided to the control unit 200. Outputs of the control unit 200 may include on/off commands 226 that are provided to actuators of certain monitored loads as described in more detail below with reference to FIGs. 3-6, as well as temperature set-points 228 for interacting with TCL loads.

FIG. 3 illustrates an example flow chart 300 for limiting power consumption according to embodiments described herein. The flow chart 300 includes starting with a mode of operation of a power limit mode being active at 302 and as such an event has started to limit the power consumption of a building. As an overview of the algorithm depicted in the flow chart 300, a control unit may collect or obtain the latest readings from different sensors (current and/or voltage) which may include measurements from a main breaker of the building. The measurements from the main breaker of the building may provide the total consumption of the building, represents in FIG. 3 as "Pt." The control unit may also collect or obtain current set point temperatures of TCL devices, if available. A targeted power consumption limit (power limit) may also be obtained. The targeted power consumption limit may be specified by a user, specified by a utility offline or online, or it may be set to be the maximum main breaker/wiring/back up source limit.

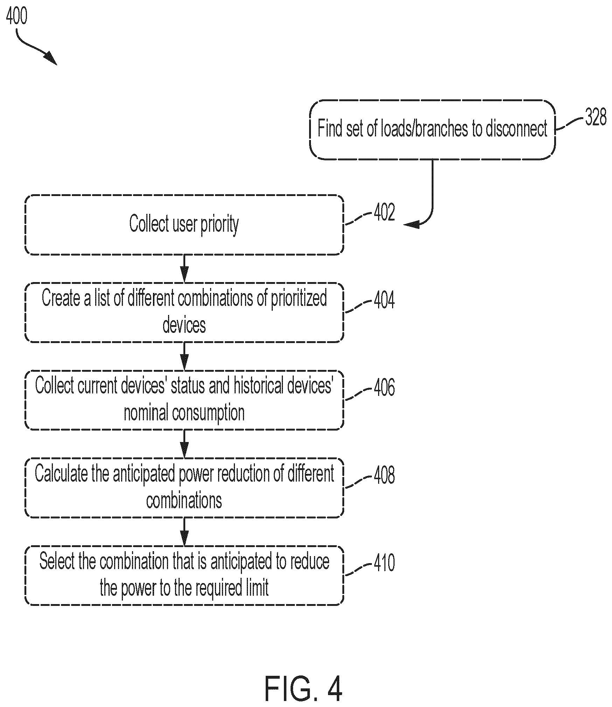

In embodiments, the control unit may compare the total power consumption of the building "Pt" to the targeted power limit. In scenarios where the consumption is higher than the targeted limit, the control unit may attempt to control the temperature of thermally controlled loads (TCLs) by setting the set point temperature to a conservation temperature. The conservation temperature is typically higher than normal in cooling seasons and lower than normal in heating seasons. The control unit can then measure the updated total consumption after this course of action and, if there is still a limit violation, accesses and collects the historical data of selected monitored loads and determines the set of loads/devices to be disconnected to satisfy the targeted power limit. This is described in more detail below with reference to FIG. 4.

Once the appropriate loads/devices are disconnected the control unit then checks again to determine if there is a violation of the targeted power limit. If so, the control unit may reassess its determination and retune the set of loads/devices to be disconnected to achieve the targeted power limit. In scenarios where the targeted power is achieved and the total power consumption is lower than the targeted power limit, the control unit maintains the current status of temperature set points as well as the load connection and disconnection status of devices, and continues to monitor the system. The control unit will continue to monitor until the event has ended or the mode of operation is deactivated (302). It is important to continue to monitor the system as long as the event is active as some other non-monitored/non-controlled load might start and change the total building consumption which means the control unit may need to take further corrective action. If the event has ended and the answer to the event question in the flow chart "Event Started?" 302 is no, the control unit determines if there was a power event active before this time instant or if it was during normal operation. If this was during normal operation and no event has started, the control unit maintains the current load connection/disconnection status.

However, if there was a power event active, the control unit may start sequential connection of disconnected loads to bring the system back to the normal operating conditions. The sequential insertion of loads/devices is important to avoid large in-rush currents that can occur when adding multiple loads simultaneously, especially large motorized loads. In embodiments, the sequential connection may occur by connecting disconnected loads back in steps with a small time delay between each loads connection. In embodiments, the sequential connection or sequence to reconnect devices/loads that were disconnected may be based on user preferences, based on the device with the largest power load, or in a reverse order that than the sequence used to disconnect. The sequential load insertion of disconnected loads may also help utilities/aggregators to avoid rebound effects in case of managing multiple buildings. It should be noted that the control unit can efficiently and accurately determine the set of loads/devices to disconnect based on user preferences and other data and reach the targeted power limit with or without updating TCLs - for situations where a house does not include any TCLs.

The flow chart 300 includes, at 304, a determination of whether an event has started. If the answer to this query is no, the flow chart 300 includes at 306 a determination of whether we are before the start of an event. The flow chart 300 determines that this is not before the start of the event at 306 then sequential insertion of disconnected loads occurs at 308. Flow chart 300 also includes at 310 maintaining the current status of load connections in response to determining that yes this is before the start of an event at 306. In flow chart 300 if the event started 304 determination results in yes then at 312 the control unit reads current consumption and obtains the targeted power limit (represented as "limit") in FIG. 3. The flow chart 300 includes at 314 a determination by the control unit whether the total power consumption is greater than the limit. If not, then the control unit maintains the current status of load connections at 310. However, if the total power consumption is greater than the limit at 314, the flow chart 300 includes determining whether any loads have been manually turned on or connected by a user since the event has started at 316. If any loads/devices have been manually connected or turned on at 316 the control unit may notify a user 318, via an application or dashboard, about the manual connections. The flow chart 300 includes disconnecting the lowest priority load of the manually connected loads at 320 and then checks whether the total power consumption is still greater than the targeted power limit.

If there are no manual connections at 316 the flow chart 300 continues to 322 to determine if any TCL devices exist and are on and whether the current set point temperature is different from the conservation temperature (less than depicted in FIG. 3). If TCL devices exist at 322 the flow chart 300 includes updating or changing the temperature of the TCL to the conservation temperature and waiting a certain amount of time (delay period) 324 before determining whether the total power consumption still exceeds the targeted power limit at 314. In scenarios where no TCLs exists or the TCLs are not connected/on, the flow chart 300 continues at 326 by collecting the status and historical consumption data of prioritized flexible loads/branches (e.g., monitored loads/devices) for the building. The flow chart 300 also includes at 328 determining the set of loads/devices to disconnect and sequentially disconnects each device before checking whether the total power consumption of the building exceeds the targeted power limit at 314. The control unit may provide signals for actuating an actuator of a monitored load/device to disconnect the load/device from the power source and then check whether the total power consumption of the building exceeds the targeted power limit at 314 before proceeding to disconnect the next device from the determined set.

FIG. 4 illustrates an example flow chart 400 for determining devices/loads to disconnect from a power source in a building according to embodiments described herein. In embodiments, the control unit may determine the optimal set of loads to be disconnected in case of a power event by first collecting or otherwise obtaining the user priorities of loads/devices 402 from a list that the user has already provided via an interface, such as an application or dashboard. The priority list provided by a user may include a set of loads/devices that the user prefers to disconnect in case of a power limiting event. The loads/devices may be listed in order to reflect the user preference from a first load to last load to be disconnected. For example, a user might prefer to disconnect a pump first, then certain equipment, and finally an HVAC or water heater. The type of loads and the order can be updated as the user prefers but they must include loads that are monitored and can be actuated by the control unit. In an embodiment, a user can also assign the same priority to multiple loads simultaneously. For example, the user can specify the same lower of priority for a water heater and certain house lights.

The control unit can implement an algorithm that uses the list of user preferences (priority list) to generate combinations of different options of prioritized loads to be disconnected, taking into consideration the order the user wants to disconnect different devices 404. This information can be used in assessing the different possible combinations of load disconnections. The control unit can also use the stored historical consumption data of monitored loads to get an estimate of a typical power consumption of different prioritized devices when they were connected to the system during a previous time period 406. The algorithm implemented by the control unit can also use the current consumption of the devices to determine the prioritized set of loads to disconnect 406. This is important because if an actuator is on and a device is connected to the system but is not consuming power then disconnecting it will not have any effect and the algorithm will need to take this into account when determining the prioritized set of loads to disconnect.

The control unit and implemented algorithm determines/calculates an anticipated power reduction of different possible combinations of the loads to be disconnected 408. By using these estimates the control unit and implemented algorithm can assesses which particular combination of loads will limit the total power consumption to equal to or less than the targeted power limit. Once the best combination is determined/selected the control unit can generate and transmit disconnect commands to actuators of the selected combination of devices (set of loads to be disconnected) 410. In embodiments, the combination can be one or multiple loads that are disconnected simultaneously. The process of determining the prioritized list of devices to disconnect provides the ability to the control unit to assess the consequences of different actions beforehand, thereby preventing the need to try different combinations in real time by disconnecting devices and seeing the effect and repeating the process multiple times. This saves power, time, and also reduces the loads that need to be disconnected from the power source.

FIG. 5 illustrates an example flow chart 500 for limiting power consumption in a scenario where some loads can be provided power from a battery or backup system according to embodiments described herein. In the scenario depicted in FIG. 5, the objective is to ensure that the total consumption of connected devices does not exceed the battery maximum power or the maximum power of the inverter connecting the battery. For this scenario the control unit and implemented algorithm(s) of the control unit may determine the optimal set of loads to be connected to the system after a power disruption (i.e., loss of main grid/source). Another aspect of this type of scenario is that loads/devices whose branches are not monitored/controlled by are considered essential loads as they will be fed from the load center and there are no actuators to control them from the control unit. As depicted in flow chart 500, the power outage event starts at 502 and the system (control unit) dispatches the battery 504 to the system and the essential loads can start getting the power from the battery directly 506. As an overview of the process depicted in FIG. 5, the control unit determines the set of controlled/monitored loads to be supplied from the battery. These are loads/devices that can be controlled and the user has previously provided the set of preferences on which of these devices to connect first.

As depicted in FIG. 5, the flow chart 500 includes the control unit obtaining the current state of charge of the battery and the maximum power limit (Pₘₐₓ) that can't be exceeded at 506. The maximum power limit of the battery can be the battery maximum power or the inverter connected to it. The control unit can also obtain the current total consumption which can be identified by monitoring the power drawn from the battery by using the current sensors in the panels. The flow chart 500 includes determining whether there is a violation of the power limit at 508 (e.g., is the current total power consumption less than the maximum power limit). If there is a violation, the control unit will notify the user 510 via an application or a dashboard (user interface) and will not connect any extra loads to the battery 512 (keep current status of load connection). This will ensure that essential loads will be supplied for the longest possible period. The flow chart 500 also includes checking the current state of charge of the battery and determining if its lower than a minimum limit at 514 (e.g., "Is SoC (state of charge) >= SoC min %"). As depicted in FIG. 5, the flow chart 500 includes notifying the user at 516 if the current state of charge of the batter is not greater than the state of charge minimum and keeping essential loads only connected at 518.

In scenarios where the current state of charge of the battery is greater than or equal to the state of charge minimum, the flow chart 500 includes at 520 determining whether TCL loads are on and obtaining a current temperature to compare to the conservation temperature for said devices. The control unit can transmit signals or instructions to modify the temperature of the TCL loads to the conservation temperature and wait for a certain period of time at 522 before checking to see if the current consumption is less than the maximum power limit at 508. The flow chart 500 also includes collecting historical consumption data and consumption of next priority load (P_{load}) at 524 if no TCLs are active/connected or the temperature is already at the conservation temperature. The flow chart 500 also includes the control unit determining the set of loads/devices to connect to the battery at 526 before checking to see if the total power consumption is less than the maximum power limit at 508.

FIG. 6 illustrates an example flow chart 600 for determining devices/loads to connect to a power source in a building according to embodiments described herein. The control unit can collect/obtain the user preferences and priority of the loads to be connected at 602. The user can provide the preferences via an application or dashboard as described herein. The control unit may implement an algorithm that uses the user preferences and priority loads to determine different possible combinations taking into account the user priority as specified in the preferences at 604. The flow chart 600 includes collecting historical devices' nominal consumption (historical consumption data) at 606. By creating this list of combinations, and with the knowledge of the typical historical nominal consumption of the prioritized devices, the control unit and implemented algorithm can calculate the anticipated power increase due to the different possible combinations at 608. With this knowledge, the control unit can assess the consequences of connecting different combinations and select the combination that will connect more devices/loads without violating the power limit (Pmax) at 610.

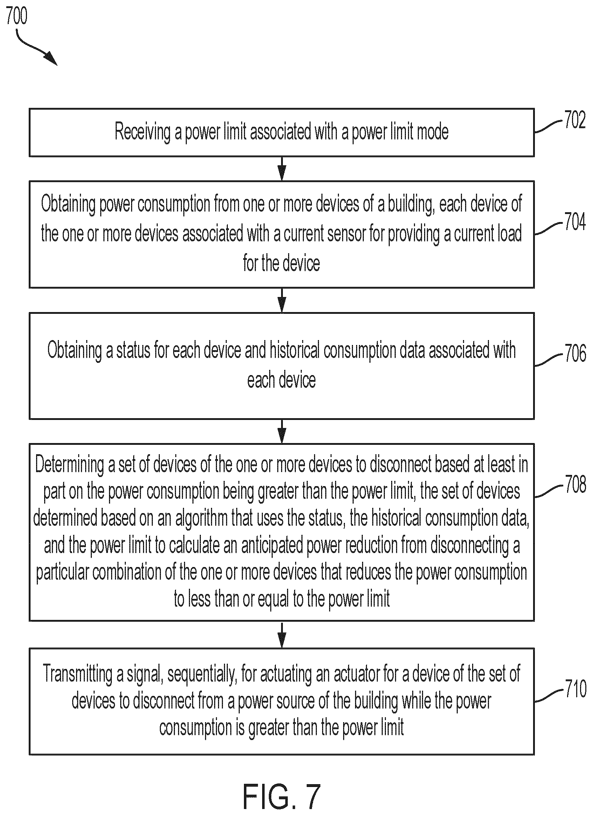

FIG. 7 illustrates a flow chart for limiting power consumption according to embodiments described herein. FIG. 7 includes exemplary process 700 which may be performed by an environment or architecture such as in FIGs. 1, 2, and 8 and by systems and components of FIGs. 1, 2, and 8. However, it will be recognized that any of the following blocks may be performed in any suitable order and that the process 700 may be performed in any environment or architecture and by any suitable computing device and/or controller.

At step 702, the process 700 includes receiving a power limit associated with a power limit mode. The process 700 may include obtaining power consumption from one or more devices of a building, each device of the one or more devices associated with a current sensor for providing a current load for the device at 704. In embodiments, the process 700 may include obtaining a status for each device and historical consumption data associated with each device at 706. The process 700 may include determining a set of devices of the one or more devices to disconnect based at least in part on the power consumption being greater than the power limit, the set of devices determined based on an algorithm that uses the status, the historical consumption data, and the power limit to calculate an anticipated power reduction from disconnecting a particular combination of the one or more devices that reduces the power consumption to less than or equal to the power limit at 708. The process 700 may include transmitting a signal, sequentially, for actuating an actuator for a device of the set of devices to disconnect from a power source of the building while the power consumption is greater than the power limit at 710.

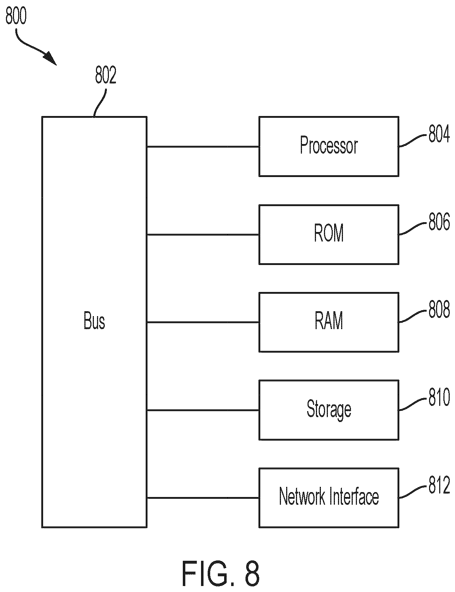

FIG. 8 illustrates a simplified block diagram of one or more devices or systems for limiting power consumption according to embodiments of the present disclosure. FIG. 8 is a block diagram of an exemplary system or device 800 including a control unit for interacting with a load center, actuators, current sensors, voltage sensors, and other entities, devices, or third party entities as described herein with reference to FIGs. 1-7. The system 800 includes a processor 804, such as a central processing unit (CPU), and/or logic, that executes computer executable instructions for performing the functions, processes, and/or methods described herein. In some examples, the computer executable instructions are locally stored and accessed from a non-transitory computer readable medium, such as storage 810, which may be a hard drive or flash drive. Read Only Memory (ROM) 806 includes computer executable instructions for initializing the processor 804, while the random-access memory (RAM) 808 is the main memory for loading and processing instructions executed by the processor 804.

The network interface 812 may connect to a wired network or cellular network and to a local area network or wide area network or Bluetooth or other suitable communication methods such as those described herein with reference to the communication component or communication module. The system 800 may also include a bus 802 that connects the processor 804, ROM 806, RAM 808, storage 810, and/or the network interface 812. The components within the system 800 may use the bus 802 to communicate with each other. The components within the system 800 are merely exemplary and might not be inclusive of every component for embodiments described herein. For instance, in some examples, the system 800 might not include a network interface 812. In embodiments the system 800 may include one or more components for interacting with a machine or system executing an automated process such as actuators, output devices (e.g., speakers or user interfaces), power convertors or power supply systems. The system may use the one or more components for executing an action in response to identifying an anomaly such as ceasing operation of the machine or system, presenting an alarm or warning, visual or auditory, or reducing or otherwise cutting power to a machine to prevent further damage or catastrophic events. In embodiments the network interface 812 may communicate with one or more machines, computers, or systems within a facility or industrial environment to obtain historic operating data, test data, and/or model files for identifying anomalies which may represent issues, problems, or potential failure of a component of a machine or system.

While the disclosure has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present disclosure covers further embodiments with any combination of features from different embodiments described above and below. Additionally, statements made herein characterizing the disclosure refer to an embodiment of the disclosure and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A computer-implemented method for limiting power consumption comprising:
receiving a power limit associated with a power limit mode;
obtaining power consumption from one or more devices of a building, each device of the one or more devices associated with a current sensor for providing a current load for the device;
obtaining a status for each device and historical consumption data associated with each device;
determining a set of devices of the one or more devices to disconnect based at least in part on the power consumption being greater than the power limit, the set of devices determined based on an algorithm that uses the status, the historical consumption data, and the power limit to calculate an anticipated power reduction from disconnecting a particular combination of the one or more devices that reduces the power consumption to less than or equal to the power limit; and
transmitting a signal, sequentially, for actuating an actuator for a device of the set of devices to disconnect from a power source of the building while the power consumption is greater than the power limit.

2. The computer-implemented method according to claim 1, wherein the set of devices is further determined based on generating a list of different combinations of devices of the set of devices using a priority of devices to be disconnected included in user preferences for each device of the set of devices, the particular combination included in the list of different combinations.

3. The computer-implemented method according to claim 2, wherein a plurality of devices of the set of devices are of a same priority as specified in the user preferences, and wherein the power limit is specified in the user preferences.

4. The computer-implemented method according to claim 1, further comprising:
determining that thermal control loads are on and that a temperature for a thermal control load device is different than a conservation temperature, the thermal control load device of the one or more devices; and
transmitting another signal to the thermal control load device to change the temperature to the conservation temperature.

5. The computer-implemented method according to claim 4, wherein determining the set of devices to disconnect based at least in part on the power consumption being greater than the power limit occurs subsequent to determining that thermal control loads are on and that the temperature for the thermal control load device is different than the conservation temperature.

6. The computer-implemented method according to claim 5, wherein determining the set of devices to disconnect based at least in part on the power consumption being greater than the power limit occurs upon expiration of a certain time period after transmitting the another signal to the thermal control load device to change the temperature to the conservation temperature.

7. The computer-implemented method according to claim 1, further comprising obtaining a voltage of the building from a voltage sensor, and wherein the algorithm further uses the voltage to determine the set of devices.

8. The computer-implemented method according to claim 1, further comprising:
determining that a particular device of the one or more devices has been manually connected to a power source of the building by a user in response to determining that the power consumption is greater than the power limit;
transmitting a notification to a user device of the user identifying the manual connection of the particular device and a status that the power consumption is greater than the power limit; and
disconnecting a certain device of the one or more devices based on a priority of devices to be disconnected included in user preferences for each device of the set of devices.

9. The computer-implemented method according to claim 1, further comprising:
determining that the power limit mode has ceased;
determining a sequence to reconnect the set of devices that were disconnected based on the power consumption being greater than the power limit, the sequence determined based at least in part on user preferences; and
transmitting signals to the set of devices to reconnect each device of the set of devices to the power source of the building according to the sequence.

10. The computer-implemented method according to claim 9, wherein the sequence is further determined based at least in part on a particular device of the set of devices with a largest power load.

11. The computer-implemented method according to claim 9, wherein the sequence is further determined based at least in part on a sequence associated with devices disconnected from the power source.

12. A computer system for limiting power consumption, the computer system comprising one or more hardware processors which, alone or in combination, are configured to provide for execution of the following steps:
receiving a power limit associated with a power limit mode;
obtaining power consumption from one or more devices of a building, each device of the one or more devices associated with a current sensor for providing a current load for the device;
obtaining a status for each device and historical consumption data associated with each device;
determining a set of devices of the one or more devices to disconnect based at least in part on the power consumption being greater than the power limit, the set of devices determined based on an algorithm that uses the status, the historical consumption data, and the power limit to calculate an anticipated power reduction from disconnecting a particular combination of the one or more devices that reduces the power consumption to less than or equal to the power limit; and
transmitting a signal, sequentially, for actuating an actuator for a device of the set of devices to disconnect from a power source of the building while the power consumption is greater than the power limit.

13. The computer system of claim 12, further comprising:
determining that a particular device of the one or more devices has been manually connected to a power source of the building by a user in response to determining that the power consumption is greater than the power limit;
transmitting a notification to a user device of the user identifying the manual connection of the particular device and a status that the power consumption is greater than the power limit; and
disconnecting a certain device of the one or more devices based on a priority of devices to be disconnected included in user preferences for each device of the set of devices.

14. The computer system of claim 12, further comprising:
determining that power limit mode has ceased;
determining a sequence to reconnect the set of devices that were disconnected based on the power consumption being greater than the power limit, the sequence determined based at least in part on user preferences; and
transmitting signals to the set of devices to reconnect each device of the set of devices to the power source of the building according to the sequence.

15. The computer system of claim 14, wherein the sequence is further determined based at least in part on a particular device of the set of devices with a largest power load.

16. A computer-implemented method for limiting power consumption comprising:
obtaining a signal that corresponds to a power outage mode for a building;
obtaining maximum power limit for a battery of the building and a state of charge for the battery;
obtaining power consumption from one or more devices of the building which are utilizing power from the battery;
determining a set of devices of the one or more devices that are not currently utilizing the power from the battery to connect to the battery based at least in part on the power consumption being less than the maximum power limit, the set of devices determined based on an algorithm that uses historical consumption data from the set of devices, user preferences, and the maximum power limit to calculate an anticipated power usage from connecting a particular combination of the one or more devices that maintains the power consumption to less than the maximum power limit; and
transmitting a signal, sequentially, for actuating an actuator for a device of the set of devices to connect to the battery while the power consumption is less than the maximum power limit.

17. The computer-implemented method according to claim 16, wherein the set of devices is further determined based on generating a list of different combinations of devices of the set of devices using a priority of devices to be reconnected included in the user preferences for each device of the set of devices and that a state of charge for the battery is greater than a minimum percentage state of charge for the battery, the particular combination included in the list of different combinations.
